# EUROPEAN PATENT SPECIFICATION

(11) **EP 3 208 351 B1**
(45) Date of publication and mention of the grant of the patent: **19.06.2019**
(21) Application number: 15851543.7
(22) Date of filing: 13.10.2015
(51) Int. Cl.: C21D 8/02, C22C 38/44, C22C 38/46, B61H 5/00, C21D 6/00, C21D 8/06, C21D 1/18, C21D 1/28, C22C 38/02, C22C 38/04, C22C 38/12, C22C 38/16, C22C 38/42, C21D 7/13, C21D 9/00, F16D 65/12, C21D 1/26

(54) **METHOD FOR MANUFACTURING BRAKE DISC FOR RAILWAY VEHICLE**
VERFAHREN ZUR HERSTELLUNG EINER BREMSSCHEIBE FÜR EIN SCHIENENFAHRZEUG
PROCÉDÉ DE FABRICATION DE DISQUE DE FREIN POUR VÉHICULE FERROVIAIRE

(30) Priority: 17.10.2014 KR 20140140866
(43) Date of publication of application: 23.08.2017
(73) Proprietor: Lee, Tae-young, Nam-gu, Ulsan 44629 (KR)
(72) Inventor: Lee, Tae-young, Nam-gu, Ulsan 44629 (KR)
(74) Representative: CH Kilger Anwaltspartnerschaft mbB
(86) International application number: PCT/KR2015/010766
(87) International publication number: WO 2016/060435

(56) References cited:
- CN-A- 102 814 447
- CN-A- 103 831 386
- GB-A- 1 239 851
- JP-A- H0 860 309
- KR-A- 20100 076 709
- KR-A- 20130 038 520
- KR-B1- 100 269 008
- KR-B1- 100 435 483
- JEONG, HO - SEUNG ET AL.: 'Inertia Friction Welding Process Analysis and Mechanical Properties Evolution of Large Rotor Shaft.' PROCEEDING OF KSPE 2009 SPRING CONFERENCE 03 June 2009, pages 185 - 186, XP009502399

## Description

### Technical Field

The teachings in accordance with exemplary and non-limiting embodiments of this disclosure relate generally to a manufacturing method of brake disc for railroad vehicles, and more particularly to a manufacturing method of brake disc for high speed railroad vehicles.

### Background Art

A general railroad vehicle, particularly a high speed railroad vehicle, moves on a rail road by driving a driving motor using a power supplied from outside, and at this time, the railroad vehicle is mounted with wheels contacting a railway, and with a braking system for braking the railroad vehicles to thereby adjust the speed of the railroad vehicles.

Particularly, the railroad vehicle consists of a heavy weight, moves along a railway, and therefore, it is natural to obtain reliability of braking system. The railroad vehicle is configured such that a truck is equipped with an axle, and both sides of the axle are mounted with wheels driving along railways, and the axle is mounted with a braking device. The brake disc is generally mounted at both distal ends of axle, where the brake disc generates a braking force in response to compression force of brake pad.

The brake disc simultaneously generates a very high pressure and a friction due to repeated contact with pads and may be used for railroad vehicles when satisfying the rigid mechanical physical properties. Various brake discs have been proposed in consideration of the foregoing physical properties for railroad vehicles.

For example, a Korean Laid-Open Patent No.: 2014-0066590 discloses a high heat-resistant break disc for a railway vehicle in which a central part is fitted into an axle of the railway vehicle, the outer circumference is joined to vehicle wheel and rotates with the vehicle wheel on the same axle, and at least one pattern unit composed of high heat-resistant nanomaterials is formed on one surface of the break disc of the railway vehicle.

Furthermore, a Korean Laid-Open Patent No.: 2012-0132036 discloses a brake disc, in a pair of brake discs for a railway vehicle fixed by a bolt and a nut at both side parts of wheel of a railway vehicle, comprises a slide unit formed on a surface corresponding to the brake disc, and a joining unit coupled the slide unit by being mounted on the wheel.

Still furthermore, a Korean Laid-Open Patent No.: 2010-0076709 discloses a brake disc using a high thermal cast iron comprised of carbon 3.0^{∼}3.8 weight %, silicon 2.0^{∼}2.6 weight %, manganese 0.3^{∼}1.0 weight %, phosphorus 0.01^{∼}0.04 weight %, sulfur 0.01^{∼}0.12 weight %, copper 0.1^{∼}0.6 weight % and iron 92.0^{∼}94.0 weight %.

Still furthermore, a Korean Laid-Open Patent No.: 2005-0006325 discloses a brake disc assembly, wherein a disc body has a bore having a certain radius and a diameter to form an outer side, plural fixing slots are formed in the disc body, the fixing slots are connected through the bore and the diameter and equipped with installation slots to be separated at regular intervals, plural separation pins are inserted in each installation slot of the disc body, the elasticity of the separation pin is adjustable, a hub contains a hub body and a hub cover, the hub body contains an installation flange having a bore in the center to be fixed in an axle, installation grooves to be partially inserted by the separation pins and fixing slots between the installation slots, the hub cover contains plural installation slots to store the rest parts of the separation pins and fixing slots to be connected with the fixing slots of the installation flange and fixed by bolts.

Chinese Patent No. CN 103 831 368 A dislcoses a metod of manufacturing a brake disk for high speed railroad vehicles using a forging mold.

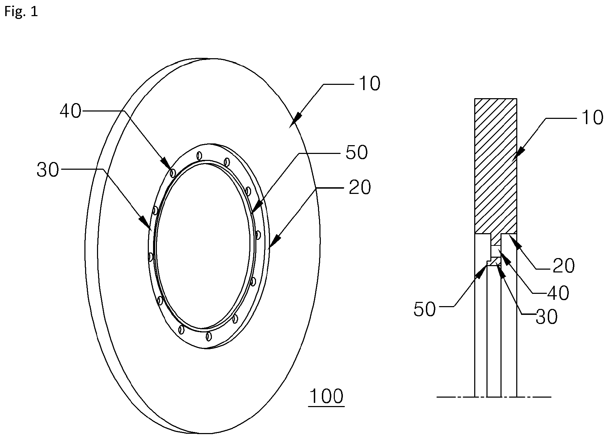

Meantime, because the high speed railroad vehicle moves at a speed much higher than the general railroad vehicle, the high speed railroad vehicle requires high physical properties for brake disc over the general railroad vehicle. As illustrated in FIG. 1, a brake disc currently used by the Korean high speed railroad vehicles is formed by including a disc body (10), a bore part (20) formed at the disc body (10), a fixing part (30) protrusively formed on the bore part (20) and a plurality of fixing slots (40) formed at the fixing part (30), where an entire diameter is 640mm, a diameter of the bore part (20) is 350mm and thickness is 45mm.

The abovementioned disc is coupled to a wheel through a separate hub, and a separate pad applies a pressure to a lateral surface of the disc to perform the braking operation. At this time, when the disc is used more than a predetermined time, that is, when there is a frequent braking operation, linear radial cracks are generated on a disc surface to a radius direction to disadvantageously limit the service life, and therefore, situation is that a method for manufacturing a disc with a relatively long life using a new manufacturing way is required.

### Detailed Description of the Invention

### Technical Subject

The teachings in accordance with exemplary and non-limiting embodiments of this disclosure are to provide solve the abovementioned problems/disadvantages, and it is an object of the present disclosure to provide a manufacturing method of a brake disc for railroad vehicles configured to enhance the life of brake disc with a new method.

### Technical Solution

In one general aspect of the present invention, there is provided a manufacturing method of brake disc for railroad vehicles, according to claims 1-4.

### Advantageous Effects of the Invention

The manufacturing method of brake disc for railroad vehicles according to the present disclosure includes manufacturing an initial shape using a ring rolling method, and manufacturing a final product through mechanical processes, and particularly, in case of ring rolling method, an entire grain is formed to a disc rotating direction to thereby provide a high resistance during contact with a brake pad and to effectively prevent generation of surface defects such as cracks generated on a surface, whereby there is an advantage of manufacturing a brake disc with a long life.

### Brief Description of the Drawings

FIG. 1 is a perspective view illustrating a shape of a disc manufactured by a manufacturing method of brake disc for railroad vehicles according to the present disclosure.
FIG. 2 is a procedure diagram illustrating by a manufacturing method of brake disc for railroad vehicles according to the present disclosure.
FIG. 3 is a schematic view illustrating a ring rolling device used in a ring rolling process of FIG. 2.
FIG. 4 is a surface photograph according to an exemplary embodiment of the present disclosure.
FIG. 5 is a table showing a degree of wear between an exemplary embodiment and a comparative example.
FIG. 6 is a table of degree of wear in a brake pad between an exemplary embodiment and a comparative example.

### BEST MODE

The present disclosure will be described in detail with reference to the accompanying drawings. The manufacturing method of brake disc for railroad vehicles according to the present disclosure includes, as method for manufacturing a brake disc (100) as illustrated in FIG. 1, a disc body (10) formed in a shape of a disc, a bore part (20) centrally formed at the disc body (10), a fixing part (30) coupled to a hub by being protrusively formed at a center of the bore part (20), a plurality of fixing holes (40) screw-connected to the hub by being formed at the fixing part (30), and a staircase (50) protrusively formed at a distal end of a surface of the fixing part (30).

At this time, a diameter of the body (10) may be 640.0±1.0mm, a diameter of the bore part (20) may be 350.0±2.0mm, a diameter where at a center of the fixing hole (40) may be 311.5±2.0mm, the number of fixing holes may be 12, an individual diameter may be 14.5±0.07mm, a thickness of body (10) may be 45.0±0.5mm, a thickness of fixing part (30) may be 11.5±0.02mm, a thickness of staircase may be 4.0±0.02mm, and a width of the staircase may be 5.0±0.3mm, but the size and tolerance thereto may be changed, if necessary.

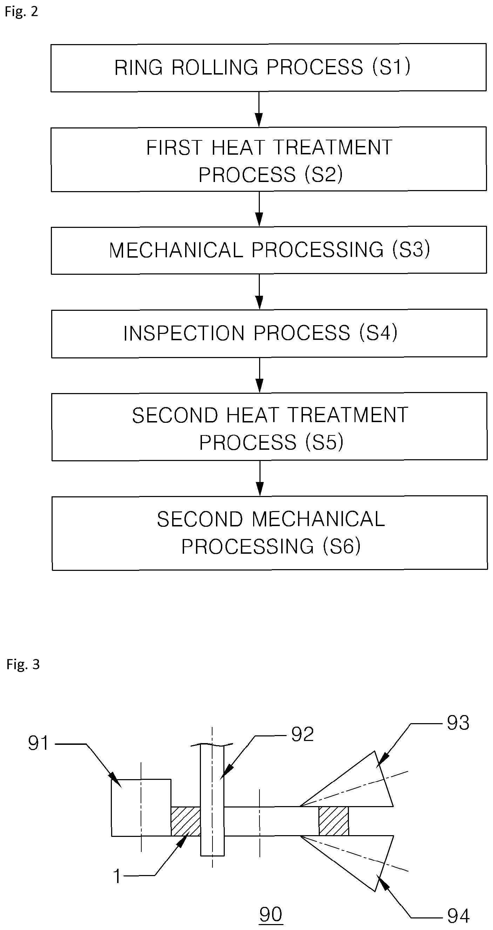

Referring to FIG. 2, the manufacturing method of brake disc for railroad vehicles according to the present disclosure includes a ring rolling process (S1), a first heat treatment process (S2), a first mechanical process (S3), an inspection process (S4), a second heat treatment process (S5) and a second mechanical process (S6).

### Ring Rolling Process (S1)

First, the ring rolling process (S1), as illustrated in FIG. 3, is performed through a ring rolling device (90) including a driving roll (91) rotating a structure (1), a rolling roll (92) applying a pressure to the structure (1) heated by being disposed at a bore part inside the structure (1), an upper axle roll (93) and a lower axle roll (94) applying a pressure to a lateral surface of the structure (1).

The driving roll (91) may rotate the structure (1), the rolling roll (92) may move a position of an axle to allow being approached to the rolling roll (91) as the processing is being progressed, and the upper axle roll (93) may be moved in its position of axle to a direction of the lower axle roll (94) as the process is being progressed.

Thus, the advantage is that, as the process is being progressed, the shape of the structure is changed as a bore and a diameter of the structure (1) increase, and width decreases, while the diameter is gradually changed, and a metallic crystal is arranged to a rotating direction. That is, a crystal grain guideline of material may be formed to a circumferential direction to prevent surface cracks formed to a radial direction.

Quality of material is steel of SFCMV1 and includes carbon 0.20^{∼}0.3 weight %, silicon 0.4^{∼}0.7 weight %, manganese 0.35^{∼}0.80 weight %, phosphorus less than 0.03 weight %, sulfur less than 0.03 weight %, nickel 0.5^{∼}0.01 weight %, chrome 1.0^{∼}1.5 weight %, molybdenum 0.7^{∼}1.30 weight %, copper 0.3^{∼}0.01 weight %, vanadium 0.2^{∼}0.3 weight %, and rest being of iron.

An initial material is in the form of an ingot, and in order to process using the ring rolling device (90) for treatment of material, the material in a shape of an ingot is heated under 1,200 C°^{∼} 1,250 C°, forming in a billet of a round rod, cut to a plural number each having a predetermined size, upsetting and manufacturing with a diameter of 300 ^{∼} 320mm, forming a hole at a center through piercing, accommodated into the ring rolling device (90), and is inserted into the rolling roll (92). A diameter of the hole at the piercing may be formed with a diameter larger than that of the rolling roll (21), For example, when using a rolling roll (21) with a diameter of 110mm, it is preferable that a hole be formed with a diameter of 120mm.

Thereafter, the ring rolling device (90) is driven to form and process the structure (1) in a shape of a round plate formed with an inner hole. At this time, in consideration of a processing part for processing, it is preferable that a diameter be of 661.0±2mm, a bore be of 259.0±2mm, and a thickness be of 70.0±2mm.

Meantime, a forming ratio in the foregoing step is as follows:
First, when manufacturing the structure in an ingot shape to a billet, an ingot length of 100 is formed in a billet length of 350^{∼}450. That is, when forming from an ingot to a billet, the billet length may be formed to be longer than the ingot length by 3.5^{∼}4.5 times. Thereafter, the billet is cut to a predetermined length, where an upset length relative to a cut billet 100 may be of 100/3.6^{∼}100/3.2.

Lastly, a cross-sectional length of 100 before the ring rolling between a bore and a diameter is formed to a cross-sectional length of 105^{∼}120 between a bore and a diameter when finished in the ring rolling, and a thickness of 100 before the ring rolling is formed to a thickness of 100/1.3^{∼}100/1.1 after the ring rolling process. That is, the thickness is formed to be reduced.

The abovementioned forming ratio can advantageously increase an entire processing speed and make a crystal characteristic excellent, and when the forming ratio is deviated, there is a concern of the material characteristic being deteriorated.

Meantime, the ingot may be determined in size through the forming ratio depending on the size of billet, cut billet and structure (1) installed on the ring rolling device (90) so that a final shape can be determined. In order to form the size of the body (10), four tons of ingots are formed to be separated to 16 cut billets.

Meantime, although the process-finished structure (1) may take a shape of being in an intermediate stage of being processed to a disc, the materialistic characteristic may be such that crystals are aligned to a circumferential direction by a rolling method to have a high strength relative to the rotation, and particularly, resistance to the brake pad increases to effectively prevent the surface cracks generated to a radial direction.

### First Heat Treatment Process (S2)

The structure (1) generated through the ring rolling process (S1) is performed with a first (initial) heat treatment process (S2) that performs a normalizing heat treatment. The first heat treatment process (S2) may be such that the process-finished structure (1) is charged into a furnace under a temperature less than 550 C° where the temperature is increased to within a temperature of 200 C°/hr, heated for 5^{∼}6 hours under 970 C°^{~} 1,000 C° and cooled by air-cooling method. At this time, when the heating temperature is less than 960 C°, the normalizing may not take effect, and when the heating temperature exceeds 1,000 C°, there is a concern that other variations may be generated, which therefore is improper, and the normalizing may not take effect when the heating time is other than 5^{∼}6 hours.

### First Mechanical Process (S3)

The structure (1) through the first heat treatment process (S2) is in a state of being mechanically processible by the normalizing process, and thereafter, a surface is processed for inspection process. The process may be performed by the conventional cutting process to remove a thickness (≈2mm) for performing a degree of non-destructive inspection.

### Inspection Process (S4)

The structure (1) through the first mechanical process (S3) has a proper surface state by the mechanical process. Thus, the structure is performed with a non-destructive inspection (ultrasonic inspection), where the inspection process (S4) determines the suitability by being inspected of an inner cracks of the structure (1). The inspection process (S4) is performed for all structures (1), and may be disposed of when an inner defect is found through the non-destructive inspection.

### Second Heat Treatment Process (S5)

When it is determined through the inspection process (S4) that the structure (1) is free from inner defects, the second heat treatment process (S5) is performed in order to enhance the mechanical characteristic of the structure (1).

The second heat treatment process (S5) is performed with quenching and annealing processes, where the quenching process is such that the structure (1) is charged into a furnace at a temperature less than 550 C°, increased to a temperature of 200 C°/hr, heated for 4.5^{∼}5.5 hours under 940C°^{∼}960C°, and quickly cooled using water. The temperature range and time are adequate for forced quenching.

Furthermore, the annealing process is also such that the structure (1) is charged into a furnace at a temperature less than 550 C°, increased to a temperature of 200 C°/hr, heated for 8^{∼}10 hours under 620 C°^{∼} 660 C°, and quickly cooled using air, and an inner stress generated by the quenching process can be removed through the annealing process.

An inner tissue of the structure (1) through the heat treatment process can remove the peculiarity of material crystal and inner stress through the first ring rolling process (S1), and the structure (1) can possess an adequate surface hardness and entire strength.

### Second Mechanical Process (S6)

The size of the structure (1) processed through the second heat treatment process (S5) includes a processing allowance in terms of size of disc (100), and the structure (1) is finally processed to a disc (100) shape through the second mechanical process (S6). The process may be performed by cutting process, and when the fixing hole (40) is formed through the cutting process, a disc (100) of a size finally required may be completed. Hereinafter, next exemplary embodiments will be described in detail.

### Exemplary Embodiment

An ingot of four-ton SFCMV1 material was heated under a temperature of 1,230 C°to make a length larger by four times, a round rod of 310mm length was formed and 16 separated billets, each having a same length, were manufactured. The length of billet was reduced to 1/3.4 and upset, and a hole of 120mm was formed at a center through the ring rolling device (100). At this time, the formation of ring rolling device (100) was such that a cross-sectional diameter {diameter-bore)/2} was increased by 1.1 times, and a height was reduced by 1/1.2, and a round plate having a diameter of 661mm, a bore of 259mm and a thickness of 70mm was manufactured.

Subsequently, the round plate was performed with the first heat treatment process for 5.5 hours under 980 C°, and was processed to have a diameter of 646mm, a bore of 274mm and a thickness of 51mm through the first mechanical process. Thereafter, good or bad was determined through the non-destructive inspection, where good material was performed with the second heat treatment process (heating for 5 hours under 950 C°for quenching, quickly cooled using water, and heating for 9 hours under 640 C°for annealing, and quick cooling), and four pieces were finally manufactured each with a size of the body (10) through the mechanical process.

### Comparative Example

The comparative example was manufactured through die forging, using material similar to that of exemplary embodiment, and four brake discs (10) were prepared that are currently for high speed railroad vehicles.

### Experimental Example (Installation Test)

The exemplary embodiment and the comparative example were directly installed on a high speed railroad vehicle, actually run for six months, run over 200,000km, and wear of disc (100) and a degree of wear for a pad coupled to the disc (100) were measured.

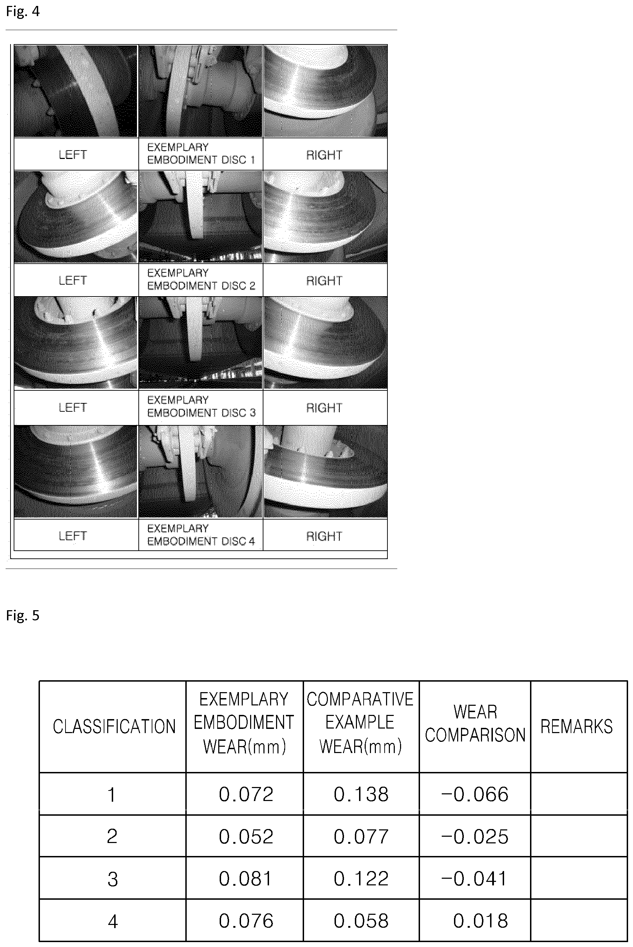

First, FIG. 4 is a surface photograph according to an exemplary embodiment of the present disclosure after completion of tests, where it can be ascertained that four discs all show an excellent surface state. Furthermore, a degree of wear for surface was made in such a manner that thicknesses before use of the exemplary embodiment and comparative example were measured, and thicknesses after use were additionally measured and a difference between the two was calculated as a degree of wear. At this time, thicknesses at four areas were measured evenly to a circumferential direction of disc, and used by arithmetic mean. The degree of wear is illustrated in FIG. 5.

Except for one product, all products of exemplary embodiments showed an excellent wear characteristic over those of comparative example. Particularly, in consideration of the fact that the wear is limited to within 1mm for a year under the current management regulations for high speed railroad vehicle, the products of exemplary embodiments have shown a high wear-resistant characteristic.

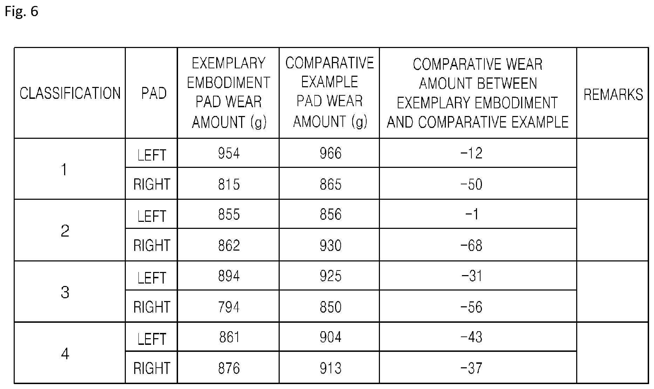

Meantime, the degree of wear for brake pad was calculated using a weight ratio by comparing a weight of pad before use with a weight of pad after use, because the pad itself can be separated. A table of degree of wear in the brake pad between an exemplary embodiment and a comparative example is illustrated in FIG. 6. As illustrated in FIG. 6, it can be ascertained that the exemplary embodiment is lower than the comparative example in terms of degree of wear in pad. Thus, it can be ascertained that the exemplary embodiment can be used for a brake disc (100) of high speed railroad vehicles due to high characteristic, because it has a low degree of wear for disc (100) itself, and the degree of wear can be simultaneously lowered.

Although the abovementioned embodiments according to the present invention have been described in detail with reference to the above specific examples, the embodiments are, however, intended to be illustrative only, and thereby do not limit the scope of protection of the present invention. Thereby, it should be appreciated by the skilled in the art that changes, modifications and amendments to the above examples may be made without deviating from the scope of protection of the invention.

## Claims

1. A manufacturing method of a brake disc for railroad vehicles, comprising a discbody (10) formed in a shape of a disc, a bore part (20) centrally formed at the disc body (10), a fixing part (30) coupled to a hub by being protrusively formed at a center of the bore part (20), a plurality of fixing holes (40) screw-connected to the hub by being formed at the fixing part (30), and a staircase (50) protrusively formed at a distal end of a surface of the fixing part (30), the method comprising:
a ring rolling process of processing, in a ring shape, a structure comprised of carbon 0.20∼0.3 weight %, silicon 0.4^{∼}0.7 weight %, manganese 0.35^{∼}0.80 weight %, phosphorus less than 0.03 weight %, sulfur less than 0.03 weight %, nickel 0.5^{∼}0.01 weight %, chrome 1.0∼1.5 weight %, molybdenum 0.7^{∼}1.30 weight %, copper 0.3^{∼}0.01 weight %, vanadium 0.2∼0.3 weight %, and rest being of iron;
a first heat treatment process of performing a normalizing treatment of a structure processed through the ring rolling process;
a first mechanical process of processing a surface of the structure finished with the first heat treatment process; an inspection process of inspecting an inside defect through a non-destructive inspection of the structure finished with the first mechanical process;
performing a heat treatment of the structure finished with the inspection process; and
a second mechanical process of processing the structure in a final disc shape,
wherein the ring rolling process includes forming an ingot using a billet under a temperature of 1,200 C°∼1, 250 C°, cutting the billet to a plurality of pieces, upsetting the cut billet, and forming the upset billet in a disc shape having a bore through a ring rolling device by piercing a center,
wherein the first heat treatment process is performed by air cooling after heating for 5∼6 hours under 970C°∼1,000C°, and
wherein the second heat treatment process includes a quick cooling with water after heating for 4.5∼5.5 hours under 940C°∼960C° during quenching and an air cooling after heating for 8∼10 hours under 620C°∼660C° during annealing.

2. The manufacturing method of claim 1, wherein the ring rolling process includes forming a billet of 350∼450 length relative to an ingot of 100 length in the ring rolling process, forming a length of upsetting relative to a cut billet 100 to be of 100/3.6∼100/3.2, forming a cross-sectional length of 100 before the ring rolling between a bore and a diameter, to a cross-sectional length of 105∼120 between a bore and a diameter when finished in the ring rolling, and forming a thickness of 100 before the ring rolling to a thickness of 100/1.3∼100/1.1 after the ring rolling process.

3. The manufacturing method of claim 1, wherein the first mechanical processing and the second mechanical processing are performed by cutting.

4. The manufacturing method of claim 3, wherein a fixing part of disc, a fixing hole and a staircase are formed in the second mechanical process.

## Patentansprüche

1. Verfahren zur Herstellung einer Bremsscheibe für Eisenbahnfahrzeuge, umfassend einen Scheibenkörper (10), geformt in Form einer Scheibe, einen Bohrungsabschnitt (20), der zentral am Scheibenkörper (10) ausgebildet ist, ein Befestigungsteil (30), das mit einer Nabe gekoppelt ist, indem es in einer Mitte des Bohrungsteils (20) vorspringend ausgebildet ist, mehrere Befestigungslöcher (40), die mit der Nabe verschraubt sind, indem sie am Befestigungsteil (30) ausgebildet sind, und eine Treppe (50), die an einem distalen Ende einer Oberfläche des Befestigungsteils vorspringend ausgebildet ist (30) das Verfahren umfasst:
ein Ringwalzprozess, bei dem in einer Ringform, eine Struktur bearbeitet wird, bestehend aus Kohlenstoff 0,20∼0,3 Gew.-%, Silizium 0,4∼0,7 Gew .-%, Mangan 0,35∼0,80 Gew.-%, Phosphor weniger als 0,03 Gew.-%, Schwefel weniger als 0,03 Gew.-%, Nickel 0,5∼0,01 Gew.-%, Chrom 1,0∼1,5 Gew.-%, Molybdän 0,7∼1,30 Gew .-%, Kupfer 0,30∼,01 Gew .-%, Vanadium 0,2∼0,3 Gew .-% und der Rest aus Eisen;
einen ersten Wärmebehandlungsprozess zum Durchführen einer Normalisierungsbehandlung einer durch den Ringwalzprozess bearbeiteten Struktur;
einen ersten mechanischen Prozess zum Bearbeiten einer Oberfläche der Struktur, die mit dem ersten Wärmebehandlungsprozess fertiggestellt ist;
einen Inspektionsprozess zum Inspizieren eines inneren Defekts durch eine zerstörungsfreie Inspektion der Struktur, die mit dem ersten mechanischen Prozess abgeschlossen ist;
Durchführen einer Wärmebehandlung der mit dem Inspektionsprozess beendeten Struktur; und ein zweiter mechanischer Prozess der Bearbeitung der Struktur in einer endgültigen Scheibenform,
wobei der Ringwalzprozess das Bilden eines Gussblocks unter Verwendung eines Barrens bei einer Temperatur von 1.200 C°∼1.250 C° umfasst, Schneiden des Barrens in mehrere Stücke, Stauchen des geschnittenen Barrens und Formen des gestauchten Barrens in Scheibenform mit einer Bohrung durch eine Ringwalzvorrichtung durch Durchstechen eines Zentrums,
wobei der erste Wärmebehandlungsprozess durch Luftkühlung nach dem Erwärmen für 5 bis 6 durchgeführt wird Stunden unter 970 C°∼1.000 C° und
wobei der zweite Wärmebehandlungsprozess ein schnelles Abkühlen mit Wasser nach 4,5-5,5 Stunden Erhitzen unter 940 C°∼960 C° während des Abschreckens und ein Luftkühlen nach 8∼10 Stunden Erhitzen unter 620 C°∼660 C° während des Glühens umfasst.

2. Verfahren gemäß Anspruch 1, wobei der Ringwalzprozess das Bilden eines Barrens mit einer Länge von 350-450 relativ zu einem Gußblock mit einer Länge von 100 im Ringwalzprozess umfasst, wobei eine Stauchlänge in Bezug auf einen geschnittenen Barren 100 zu 100/3,6-100/3,2 geformt wird, wobei eine Querschnittslänge von 100 vor dem Ringwalzen zwischen einer Bohrung und einem Durchmesser zu einer Querschnittslänge von 105-120 zwischen einer Bohrung und einem Durchmesser geformt wird, wenn das Ringwalzen beendet ist, und Formen eine Dicke von 100 vor dem Ringwalzen auf eine Dicke von 100/1,3-100/1,1 nach dem Ringwalzen.

3. Verfahren nach Anspruch 1, wobei die erste mechanische Bearbeitung und die zweite mechanische Bearbeitung durch Schneiden erfolgen.

4. Verfahren nach Anspruch 3, wobei in dem zweiten mechanischen Prozess ein Befestigungsteil der Scheibe, ein Befestigungsloch und eine Treppe gebildet werden.

## Revendications

1. Procédé de fabrication d'un disque de frein pour véhicules de chemin de fer, comprenant:
Une cage de disque (10) en forme de disque, une pièce d'alésage (20) formée au centre de la cage de disque (10), une pièce d'ajustement (30) couplée à un moyeu en étant formée en saillie au centre de la pièce d'alésage (20), un ensemble de trous d'ajustement (40) formés sur la pièce d'ajustement (30) et reliés au moyeu par le moyen d'un système vis-écrou, et un escalier (50) formé en saillie à l'extrémité distale d'une surface de la pièce d'ajustement (30)
Le procédé comprenant:
Un processus de laminage annulaire consistant à traiter, une structure composée de carbone à 0,20-0,3 %mas, de silicium à 0,4-0,7 %mas, de manganèse à 0,35-0,80% %mas, de phosphore à moins de 0,03 %mas, de soufre à moins de 0,03 %mas, nickel 0,5-0,01 %mas, chrome 1,0-1,5 %mas, molybdène 0,7-1,30 %mas, cuivre 0,3-0,01 %mas, vanadium 0,2-0,3 %mas et le reste étant du fer ;
Un premier processus de traitement thermique consistant à effectuer un traitement de normalisation d'une structure traitée par le processus de laminage annulaire;
Un premier processus mécanique de traitement de la surface de la structure à la suite du premier processus de traitement thermique;
Un processus d'inspection consistant à inspecter les défauts intérieurs par le biais d'une inspection non-destructive de la structure à la suite du premier processus mécanique ;
Effectuer un traitement thermique de la structure à la suite du processus d'inspection; et
Un deuxième processus mécanique de traitement de la structure sous la forme d'un disque final,
dans lequel le processus de laminage annulaire comprend la formation d'un lingot en utilisant une billette, à une température de 1 200 C°∼1 250 C°, la découpe de la billette en plusieurs pièces en retournant la billette coupée, et le modelage de la billette retournée sous la forme d'un disque annulaire, avec un alésage central dans lequel le premier traitement thermique est effectué par refroidissement à l'air après chauffage pendant 5-6 heures sous 970 C°∼1000 C°, et
dans lequel le second processus de traitement thermique comprend un refroidissement rapide à l'eau après chauffage pendant 4,5-5,5 heures sous 940 C°∼960 C° pendant la trempe, et un refroidissement à l'air après chauffage pendant 8-10 heures sous 620 C°∼660 C° pendant le recuit.

2. Procédé de fabrication selon la revendication 1, dans lequel le processus de laminage annulaire comprend la formation d'une billette de 350-450 longueurs par rapport à un lingot de 100 longueurs dans le processus de laminage annulaire, la formation d'une longueur de refoulement par rapport à une billette coupée 100, devant être de 100/3,6-100/3,2; partant d'une longueur en coupe transversale de 100 entre l'alésage et le diamètre avant le laminage annulaire, à une longueur en coupe transversale de 105-120 entre l'alésage et le diamètre une fois le laminage annulaire terminé, et partant d'une épaisseur de 100 avant le laminage annulaire à une épaisseur de 100/1,3-100/1,1 après le processus de laminage annulaire.

3. Procédé de fabrication selon la revendication 1, dans lequel le premier et le deuxième traitements mécaniques sont effectués par découpage.

4. Procédé de fabrication selon la revendication 3, dans lequel une pièce d'ajustement de disque, un trou d'ajustement et un escalier sont formés lors du deuxième processus mécanique.
